# EUROPEAN PATENT SPECIFICATION

(11) **EP 4 363 707 B1**
(45) Date of publication and mention of the grant of the patent: **28.01.2026**
(21) Application number: 21739910.4
(22) Date of filing: 30.06.2021
(51) Int. Cl.: F02D 19/02, F02D 29/06, F02D 41/00, F01N 3/30, F02M 21/02, F02D 41/14, F01N 3/10, F01N 3/22, F01N 9/00, F01N 3/02, F02M 25/14

(54) **AN INTERNAL COMBUSTION ENGINE AND A METHOD FOR OPERATING AN INTERNAL COMBUSTION ENGINE**
VERBRENNUNGSMOTOR UND VERFAHREN ZUM BETRIEB EINES VERBRENNUNGSMOTORS
MOTEUR À COMBUSTION INTERNE ET PROCÉDÉ DE COMMANDE DE MOTEUR À COMBUSTION INTERNE

(43) Date of publication of application: 08.05.2024
(73) Proprietor: Innio Jenbacher GmbH & Co OG, 6200 Jenbach (AT)
(72) Inventor: URL, Michael, 85375 Neufahrn (DE)
(74) Representative: Torggler & Hofmann Patentanwälte - Innsbruck
(86) International application number: PCT/AT2021/060230
(87) International publication number: WO 2023/272317

(56) References cited:
- JP-A- 2020 090 895
- US-A- 5 783 160
- US-A1- 2011 283 684
- US-A1- 2016 101 413

## Description

The present invention concerns an ammonia internal combustion engine with the features of the preamble of claim 1 and a method for operating an internal combustion engine.

Ammonia (NH3) as a non-carbon fuel for internal combustion engines is promising for future applications, especially for stationary power plant internal combustion engines driving an electrical generator (gensets).

Beside the benefit, that no CO2 or HC emissions occur during combustion of an air-ammonia mixture, a disadvantage of ammonia as a fuel is that during combustion next to desired N2 also NOx and N2O (also referred as to laughing gas) is formed. Especially under lean conditions (lambda value > 1), N2O could be massively formed. It is known that N2O has a significant higher global warming potential than CO2, which is of course a significant drawback concerning to reduce the greenhouse effect.

Internal combustion engines using ammonia as a fuel are e.g. disclosed in US 2011/0114069 A1, US 2011/0259290A1, EP 2 378 094 A1, US 2010/0019506 A1, WO 2019/035718 A1 and JP 2020 090895 A.

It is part of general knowledge that the N2O content reduction in the exhaust released to the ambient can be achieved with a special, difficult to produce, and therefore expensive catalyst, which is especially for large genset applications uneconomic. Such catalysts need high temperatures to convert N2O, wherein the high temperatures have to be achieved in the combustion process mostly by inefficient combustion parameters.

The object of the invention is to reduce the amount of N2O in the exhaust gas released to the ambient when ammonia is used as a fuel without the necessity of N2O reduction catalysts.

This object is achieved with an internal combustion engine with the features of claim 1 and a method for operating an internal combustion engine with the features of claim 9.

According to the invention it is provided that an internal combustion engine comprises:
- a plurality of piston-cylinder units comprising a main combustion chamber,
- an engine control device for controlling the operation of the internal combustion engine, the engine control device and the piston-cylinder units being configured for combustion of an under-stoichiometric air-ammonia mixture generating an exhaust gas containing NOx, N2O and residual ammonia,
- an exhaust gas aftertreatment device for aftertreatment of the exhaust gas generated during operation, wherein the exhaust gas aftertreatment device comprises:
   - at least one SCR converter or at least one three-way catalytic converter to reduce at least the amount of NOx in the exhaust gas,
   - at least one ammonia slip catalyst downstream the at least one SCR catalytic converter or the three-way catalytic converter to reduce the amount of residual ammonia in the exhaust gas,
   - at least one oxygen injection device to inject oxygen from an oxygen source upstream or into the at least one ammonia slip catalyst to provide oxygen to the at least one ammonia slip catalyst,
wherein the engine control device is configured to:
- control at least one actuator to provide an air-ammonia mixture with a lambda value in a range between 0,95 to 0,999 to the at least one main combustion chamber to create a relatively low amount of the N2O in the exhaust gas, and
- control the amount of oxygen provided to the at least one ammonia slip catalyst depending on the lambda value of the under-stoichiometric air-ammonia mixture to decrease the amount of residual ammonia in the exhaust gas.

SCR converters or three-way catalytic converters are used in applications with internal combustion engines for exhaust gas aftertreatment, wherein selective catalytic reduction (SCR) converters and three-way catalytic converters are used for reduction of nitrogen oxides (also referred as NOx) with the aid of catalytic materials into diatomic nitrogen (N2), and water (H2O).

Ammonia slip catalysts (also named ASC) are used for reduction of ammonia into diatomic nitrogen (N2), and water (H2O).

It is well known that combusting ammonia by an internal combustion engine next to the wanted diatomic nitrogen (N2) also nitrogen oxides (NOx) and nitrous oxide (N2O), also known as laughing gas, is formed, wherein especially under lean conditions (lambda value larger than one) more nitrous oxides (N2O) is formed, which as mentioned has a large detrimental global warming potential.

With the help of the at least one SCR converter or the at least one three-way catalytic converter nitrogen oxides (NOx) could be reduced, but very likely an excess of ammonia (NH3) will be present.

To reduce the ammonia level in the exhaust gas downstream of the at least one SCR converter or the at least one three-way catalytic converter at least one ammonia slip catalyst is used.

For NH3-reduction additional oxygen is required, therefore, air is introduced by the at least one oxygen injection device to inject oxygen from an oxygen source upstream or into the at least one ammonia slip catalyst.

The oxygen provided to the at least one ammonia slip catalyst can be provided pure or as part of air (e.g. oxygen enriched ambient air). The oxygen can for example be provided by an oxygen tank, a pipeline or an oxygen generating aperture.

The at least one oxygen injection device (up and/or downstream the SCR converter or up and/or downstream the three-way catalytic converter can be done via a separate air compressor or via an "air bleed" from the internal combustion engine. Bleed air is a compressed air taken from a compressor stage of a turbo charger upstream of combustion chambers of the internal combustion engine.

It can be provided that air mass flow injected by the at least one oxygen injector to the at least one ammonia slip catalyst is in a range of 1 - 10% of the exhaust gas mass flow generated by the internal combustion engine.

In some embodiments it can be advantageous to use combustion promoters to increase the combustibility of the air-ammonia mixture, which has to be combusted in the piston-cylinder units. Therefore, in some embodiments a hydrogen source for providing hydrogen to each piston-cylinder-unit is provided, wherein the control device is configured to provide hydrogen to each piston-cylinder-unit in a range of 0 to 2 mass%, preferably of 0 to 1 mass%, in particular 0 to 0,3 mass% (note that all mass% of hydrogen are given with respect to the total fuel mass brought into a combustion chamber).

In such embodiments it can be provided that:
- the hydrogen source is provided in the form of a hydrogen tank, and/or
- the hydrogen source is provided in the form of a reformer for cracking ammonia to reach a range of 0 to 2 mass%, preferably of 0 to 1 mass%, in particular 0 to 0,3 mass%.

Preferred embodiments are defined in the dependent claims.

Preferably it can be provided that the engine control device is configured to control the at least one actuator to provide an air-ammonia mixture with an average lambda value in a range between 0,97 to 0,995.

Under combustion of a lean air-ammonia mixture nitrous oxide (N2O), also known as laughing gas, is formed. The higher the stoichiometric air-ammonia mixture, which is combusted, is the higher the generated amount of nitrous oxide (N2O). Therefore, it is beneficial to keep the lambda value close below 1, wherein the formed nitrous oxide (N2O) mass compared to lower lambda values is relatively low.

It can be provided that an ammonia and/or a NOx sensor is arranged up- or downstream the at least one ammonia slip catalyst, preferably downstream the at least one SCR converter or the at least one three-way catalytic converter.

Preferably it can be provided that the at least one actuator is a fuel supply valve (or several thereof) with adjustable fuel mass flow rates, which is configured to adjust the amount of ammonia admixed to the air provided to the at least one main combustion chamber.

Alternatively or additionally, the at least one actuator can comprise fuel injectors.

It can be provided that the oxygen source is a charge air from the internal combustion engine, wherein an oxygen supply line for the at least one ammonia slip catalyst is branched off an air supply line being fluidically connected to the piston-cylinder units, preferably downstream a compressor of a turbo charger. Such a configuration of branch off charged air is also known by the term "bleed air".

Preferably it can be provided that the oxygen source is oxygen enriched air or pure oxygen from a tank and/or ambient air, preferably wherein an air compressor separated from the internal combustion engine is provided to compress the ambient air and/or the oxygen enriched air or the pure oxygen from the tank.

It can be provided that the oxygen source is an ammonia synthesis apparatus, which ammonia synthesis apparatus is configured to separate air provided for ammonia synthesis into a nitrogen-rich stream for ammonia synthesis and an oxygen-rich stream which is at least partly provided to the at least one ammonia slip catalyst.

Preferably it can be provided that that at least one heat exchanger is provided which is configured:
- to exchange heat between exhaust gas upstream the at least one SCR catalytic converter or a three-way catalytic converter on the one hand and exhaust gas upstream of the at least one ammonia slip catalyst on the other hand and/or
- to exchange heat of the exhaust gas upstream of the at least one ammonia slip catalyst and a separate facility.

Regarding the method for operating an internal combustion engine according to the invention it is provided that the following method steps are carried out:
- operating a plurality of piston-cylinder units with combustion of an under-stoichiometric air-ammonia mixture generating an exhaust gas containing NOx, N2O and residual ammonia,
- treating the exhaust gas in at least one SCR catalytic converter or at least one three-way catalytic converter to reduce at least the amount of NOx in the exhaust gas,
- subsequently treating the exhaust gas treated in the at least one SCR catalytic converter or the at least one three-way catalytic converter in at least one ammonia slip catalyst to reduce the amount of residual ammonia in the exhaust gas,
- injecting oxygen from an oxygen source upstream or into the at least one ammonia slip catalyst to provide oxygen to the at least one ammonia slip catalyst,
- controlling at least one actuator of the internal combustion engine to provide an air-ammonia mixture with a lambda value in the range between 0,95 to 0,999 to the at least one main combustion chamber to create a relatively low amount of the N2O in the exhaust gas being released to the ambient, and
- controlling the amount of oxygen provided to the at least one ammonia slip catalyst depending on the lambda value of the under-stoichiometric air-ammonia mixture to decrease the amount of residual ammonia in the exhaust gas.

It can be provided that the control device controls at least one actuator of the internal combustion engine to provide an air-ammonia mixture with a lambda value in a range between 0,97 to 0,995.

Preferably it can be provided that the predefined lambda value is used as setting parameter for the internal combustion engine, wherein the predefined lambda value is used as mean value having an upper and lower acceptable deviation range, wherein the actual present (preferable measured) lambda value can shift. This deviation can for example be in a range of the third decimal place of the lambda value.

It can be provided that the lambda value is set depending on a ratio r (*c_{NOx}* / *c*_{*NH*3}) of the amount of NOx and residual ammonia in the exhaust gas, wherein said ratio r is required to be within a range between 0,9 and 1.

Preferably it can be provided that the lambda value is set based on a main condition in view of a secondary condition, wherein the main condition is that the amount of N2O in the exhaust gas being released to the ambient is minimized while the secondary condition being that the ratio r is within the range is fulfilled.

It can be provided that the amount of ammonia (NH3) and/or the amount of NOx in the exhaust gas is measured with sensors downstream the at least one combustion chamber, preferably upstream and/or downstream the at least one ammonia slip catalyst.

Preferably it can be provided that for a lower set point of the lambda value of the air-ammonia mixture a higher amount of oxygen is provided to the at least one ammonia slip catalyst compared to the amount of oxygen provided to the at least one ammonia slip catalyst at a higher set point of the lambda value of the air-ammonia mixture, wherein preferably the lambda value is measured via a lambda sensor and/or calculated from ammonia and air flow rates to the at least one combustion chamber.

It can be provided that the amount of oxygen provided to the at least one ammonia slip catalyst is based on a look-up table, the look-up table mapping the lambda value and/or an engine load to an amount of oxygen provided to the at least one ammonia slip catalyst.

Therefore, the actual present lambda value can be determined or measured, wherein by use of the look-up table an amount of oxygen which has to be provided for the at least one ammonia slip catalyst can be determined and can be adjusted by use of the at least one oxygen injection device.

Preferably it can be provided that the amount of oxygen provided to the at least one ammonia slip catalyst is based on the residual ammonia up- or downstream the at least one ammonia slip catalyst.

It can be provided that the amount of oxygen provided to the at least one ammonia slip catalyst is proportional to the residual ammonia in the exhaust stream and/or an engine load and/or an exhaust mass flow.

It can be provided that that the oxygen mass flow to the at least one ammonia slip catalyst is in a range of 0,05 - 0,5% of the exhaust gas mass flow out of the internal combustion engine.

Preferably it can be provided that heat is exchanged between exhaust gas upstream the at least one SCR converter or the at least one three-way catalytic converter on the one hand and exhaust gas upstream of the at least one ammonia slip catalyst (and downstream the at least one SCR converter or the at least one three-way catalytic converter) on the other hand in order to improve the selectivity of the reduction of NOx and NH3 in the exhaust gas.

Using a heat exchanger, which exchanges heat of the mass flow upstream the at least one SCR catalytic converter or the at least one three-way catalytic converter on the one hand and upstream the at least one ammonia slip catalyst on the other hand, generates the possibility to control the temperature of the at least one ammonia slip catalytic converter by controlling the exhaust gas temperatures provided to the at least one ammonia slip catalytic converter.

Ammonia slip catalysts should be controlled in a defined temperature range to convert selectively ammonia from the exhaust gas passing the ammonia slip catalyst.

SCR catalytic converters should be controlled in a defined temperature range to convert selectively nitrogen oxides (NOx) from the exhaust gas passing the ammonia slip catalyst.

Three-way catalytic converters should be heated to a lower temperature limit, wherein above this temperature limit the three-way catalytic converters start to reduce the nitrogen oxides (NOx) in the exhaust gas passing the three-way catalytic converter. The temperature can be raised above the lower temperature limit by controlling the ignition timing, the lambda value or the compression ratio of the internal combustion engine to increase the heat impact to the three-way catalytic converter, especially during start-up of the internal combustion engine.

The higher the temperature of a three-way catalytic converter is, the higher the reduction rate of nitrogen oxides (NOx). Therefore, the operation of a three-way catalytic converter is in practice not limited by an upper temperature limit (as for example the ammonia slip catalyst or the SCR catalytic converter) beside the hardware limitations regarding high temperatures given on aspects as the mechanical stability or the thermal aging of the catalytic materials.

The actual temperature of these catalytic converters can be determined by a measurement of a temperature upstream and a measurement downstream of the converter, wherein by use of these two temperatures and the temperature difference a temperature of the converter or the catalytic materials can be determined.

Therefore, if the at least one ammonia slip catalyst reaches an upper temperature limit of the temperature range in which the converter should be operated the temperature can be reduced by using a heat exchanger, exchanging heat of the exhaust gas upstream and downstream of the at least one ammonia slip catalyst.

Also, heat can be delivered to the ammonia slip catalyst from the at least one three-way catalytic converter or the at least one SCR converter if the temperature of the ammonia slip catalyst is below a temperature range in which the converter should be operated by use of a heat exchanger, exchanging heat of the exhaust gas upstream of the at least one SCR catalytic converter or the at least one three-way catalytic converter on the one hand und upstream of the ammonia slip catalytic converter on the other hand.

Preferably it can be provided that a closed-loop control of the lambda value, the amount of oxygen provided to the at least one ammonia slip catalyst, the ratio r, and/or the heat or removed or provided to the exhaust gas upstream the at least one ammonia slip catalyst is carried out, the closed loop control preferably comprising at least one of the steps:
a) decreasing the lambda value set point and increasing the amount of oxygen provided to the at least one ammonia slip catalyst when the ratio r is within the range between 0,97 and 1, leading to a shift of the ratio r closer to 0,9 and a minimization of the amount of N2O in the exhaust gas being released to the ambient,
b) removing heat or providing heat to the exhaust gas upstream the ammonia slip catalyst (6) such that the ratio r stays within the range between 0,97 and 1 and a minimized amount of N2O reached in step a) is maintained.

Generally, nitrous oxide (N2O) should be kept as low as possible, wherein it is preferable to keep the lambda low to decrease the nitrous oxide (N2O). Unfortunately, as lower the lambda value becomes, the higher the ammonia pollution of the exhaust gas. Therefore, the at least one ammonia slip catalyst is provided and oxygen is injected upstream or into the ammonia slip catalyst.

To further reduce the nitrous oxide (N2O) the lambda value can be reduced if the at least ammonia slip catalyst is operated in an optimal temperature range (which can be done by the temperature control using the heat exchanger of the at least one ammonia slip catalyst).

As mentioned before, the invention can be used on stationary internal combustion engines combusting ammonia, particularly preferably internal combustion engines comprising pre-chambers, driving a generator for generating electrical energy or driving pumps for e.g. the oil industry. Such internal combustion engines driving a generator are called gensets.

Further details and advantages of the invention are apparent from the accompanying figures and the following description of the drawings. The figures show:
- Fig. 1a - c: different embodiments of an internal combustion engine according to the invention,
- Fig. 2a, b: diagrams, wherein the impact of the exhaust treatment of an internal combustion engine according to the invention is compared to the prior art, and
- Fig. 3: influence of temperature to an ammonia slip catalyst.

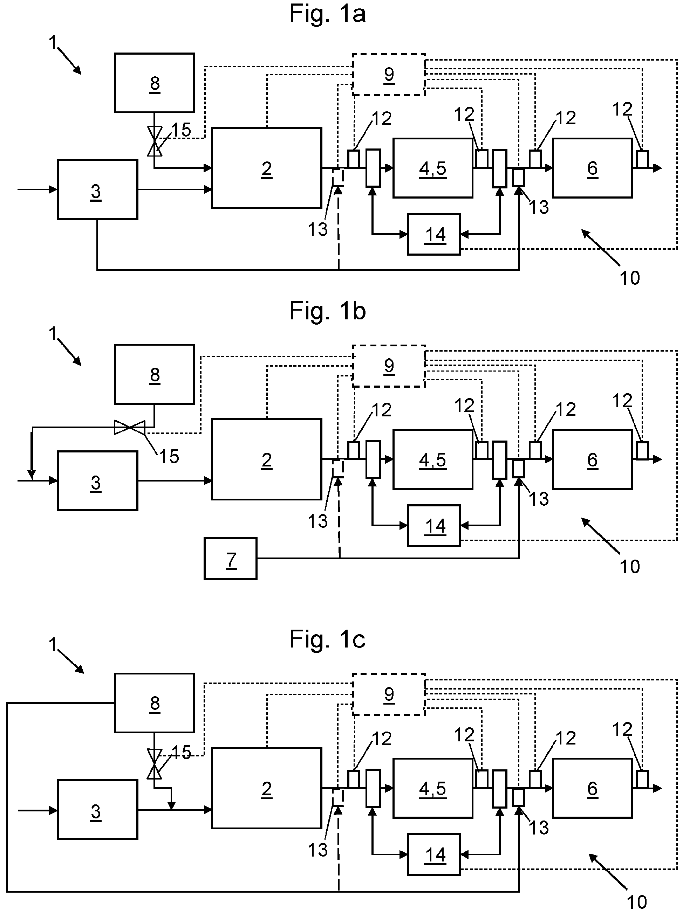

Fig. 1 discloses a first embodiment of an internal combustion engine 1 according to the invention, wherein the internal combustion engine comprises a plurality of piston-cylinder units 2.

The piston-cylinder units 2 comprise main combustion chambers, wherein in operation of the internal combustion engine 1 an under-stoichiometric air-ammonia mixture can be combusted generating an exhaust gas containing NOx, N2O and residual ammonia.

Furthermore, a turbocharger 3 is provided, wherein an ambient air can be compressed by the turbo charger and fed to the piston-cylinder units 2, wherein the compressed air of the turbo charger 3 is mixed in the main combustion chambers of the piston-cylinder units 2 with ammonia to form a combustible under-stoichiometric air-ammonia mixture.

The turbo charger 3 comprises an exhaust turbine, which drives a compressor. The exhaust turbine is driven by an exhaust mass flow of the internal combustion engine 1, wherein the turbine is coupled by a shaft to the compressor, which uses the rotational energy delivered from the turbine to compress ambient air. Also, embodiments using electrical turbochargers or compressors driven by the crankshaft of the internal combustion engine 1 are known.

The ammonia delivered to the piston-cylinder units 2 is provided by an ammonia tank 8. Alternatively it can also be provided that instead of an ammonia tank 8 a pipeline, an ammonia synthesis apparatus or any other source for ammonia can be provided.

The ammonia from the ammonia tank 8 is fed to the combustion chambers of the piston-cylinder units 2, wherein the ammonia is mixed with the compressed air provided by the turbo charger 3 and is combusted by generating an exhaust gas containing NOx, N2O and residual ammonia.

Alternatively, it can also be provided that the ammonia from the ammonia tank 8 is supplied upstream the turbo charger 3 (as shown by Fig. 1b) or downstream of the turbo charger 3 and upstream of the piston-cylinder units 2 (as shown by Fig. 1c).

The engine control device 9 is configured to control the operation of the internal combustion engine 1 and, wherein the engine control device 9 controls the combustion in the piston-cylinder units 2 by adjusting the fuel mass flow rates by the actuator 15, which is configured to adjust the amount of ammonia admixed to the air provided to the main combustion chambers.

The exhaust gas generated by the combustion of the under-stoichiometric air-ammonia mixture in the main combustion chambers of the piston-cylinder units 2 is passed over by the exhaust manifold to the exhaust gas aftertreatment device 10.

The exhaust gas aftertreatment device 10 comprises a SCR converter 4 or a three-way catalytic converter 5 to reduce at least the amount of NOx in the exhaust gas.

Downstream of the SCR converter 4 or the three-way catalytic converter 5 an ammonia slip catalyst 6 is provided to reduce the amount of residual ammonia in the exhaust gas.

Upstream and downstream of the SCR converter 4 or the three-way catalytic converter 5 and the ammonia slip catalyst 6 temperature sensors 12 are provided for measurement of a temperature of the exhaust gas. Theses sensors 12 are connected to the engine control device 9 by signal lines (shown by the dotted lines) to transfer the measurement values to the engine control device 9.

Additionally or alternatively, the sensors 12 can be provided as NH3- or NOx-sensors, wherein NH3 or NOx concentrations can be measured and transmitted to the engine control device 9.

The engine control device 9 is configured to estimate a temperature of the SCR converter 4, the three-way catalytic converter 5 and/or the ammonia slip catalyst 6 by the measured temperatures up and downstream of each converter.

Furthermore, the exhaust gas aftertreatment device 10 comprises an oxygen injection device 13 to inject oxygen from an oxygen source upstream the ammonia slip catalyst 6 to provide oxygen to the at least one ammonia slip catalyst 6.

Additionally, a further oxygen injection device 13 can be provided to inject oxygen from an oxygen source upstream the SCR converter 4 (as additional feature only shown by dashed lines). Such a configuration of an oxygen source upstream of the converter may only be advantageous in a configuration having an SCR converter 4.

The oxygen injection devices 13 can be controlled by the engine control device 9, wherein a mass flow of the oxygen injected upstream the converters 4,5,6 can be adjusted.

The oxygen source of Fig. 1a is in the form of a partial compressed air stream which is branched off at the turbo charger 3. Such a configuration, wherein a partial compressed air stream is branched off the turbo charger, is also known as "air bleed".

The engine control device 9 is configured to control at least one actuator to provide an air-ammonia mixture with a lambda value less than one to the at least one main combustion chamber to create a relatively low amount of the N2O in the exhaust gas and control the amount of oxygen provided to the at least one ammonia slip catalyst 6 depending on the lambda value of the under-stoichiometric air-ammonia mixture to decrease the amount of residual ammonia in the exhaust gas.

A heat exchanger 14 is provided, which is configured to exchange heat of the exhaust gas mass flow upstream the SCR catalytic converter 4 or a three-way catalytic converter 5 on the one hand and upstream the ammonia slip catalyst 6 on the other hand.

The heat exchanger 14 comprises in this embodiment a heat exchanging module:
- upstream of the SCR converter 4 or a three-way catalytic converter 5 and
- downstream of the SCR converter 4 or a three-way catalytic converter 5 and upstream of the ammonia slip catalyst 6
wherein heat can be exchanged between the exhaust gas mass flow upstream and downstream of the SCR converter 4 or a three-way catalytic converter 5.

By the heat exchange of the exhaust gas mass flow upstream and downstream of the SCR converter 4 or a three-way catalytic converter 5 the temperature of
- the SCR converter 4 or a three-way catalytic converter 5 on the one hand and
- the ammonia slip catalyst 6
can be adjusted.

The heat exchanger modules exchange heat between the exhaust gas and a heat exchange fluid of the heat exchanger 14, wherein the heat exchanger 14 can deliver the heat from the one exchanging module to the other by use of a pump and the heat exchange fluid.

Ammonia slip catalysts 6 should be controlled in a defined temperature range to convert selectively ammonia from the exhaust gas passing the ammonia slip catalyst 6.

SCR catalytic converters 4 should be controlled in a defined temperature range to convert selectively nitrogen oxides (NOx) from the exhaust gas passing the ammonia slip catalyst 4.

Three-way catalytic converters 5 should be heated to a lower temperature limit, wherein above this temperature limit the three-way catalytic converters 5 start to reduce the nitrogen oxides (NOx) in the exhaust gas passing the three-way catalytic converter 5. The temperature can be raised above the lower temperature limit by controlling the ignition timing, the lambda value or the compression ratio of the internal combustion engine 1 to increase the heat impact to the three-way catalytic converter 5, especially during start-up of the internal combustion engine 1.

The higher the temperature of a three-way catalytic converter 5, the higher the reduction rate of nitrogen oxides (NOx). Therefore, the operation of a three-way catalytic converter 5 is not limited by an upper temperature limit (as for example the ammonia slip catalyst 6 or the SCR converter 4) beside the hardware limitations regarding high temperatures given on aspects as the mechanical stability or the thermal aging of the catalytic materials.

Therefore, if the at least one ammonia slip catalyst 6 reaches an upper temperature limit of the temperature range in which the converter 6 has to be operated heat can be exchanged upstream the ammonia slip catalyst 6 on the one hand and upstream the at least one three-way catalytic converter 5 or the at least one SCR converter 4, wherein the SCR converter 4 can be controlled in an optimal temperature range or the three-way catalytic converter 5 can additionally be heated up for reaching an increased reduction rate.

The second embodiment of an internal combustion engine shown by Fig. 1b is essentially the same as the embodiment of Fig. 1a with the difference that the oxygen source is provided by an oxygen tank 7.

Also, the third embodiment shown by Fig. 1c is essentially the same as the embodiment of Fig. 1a with difference that that the oxygen source is provided by the ammonia tank 8, wherein also oxygen can be provided to the at least one ammonia slip catalyst 6. Such a configuration can for example be provided by an ammonia synthesis aperture, wherein air is separated to provide oxygen for the at least one ammonia slip catalyst 6.

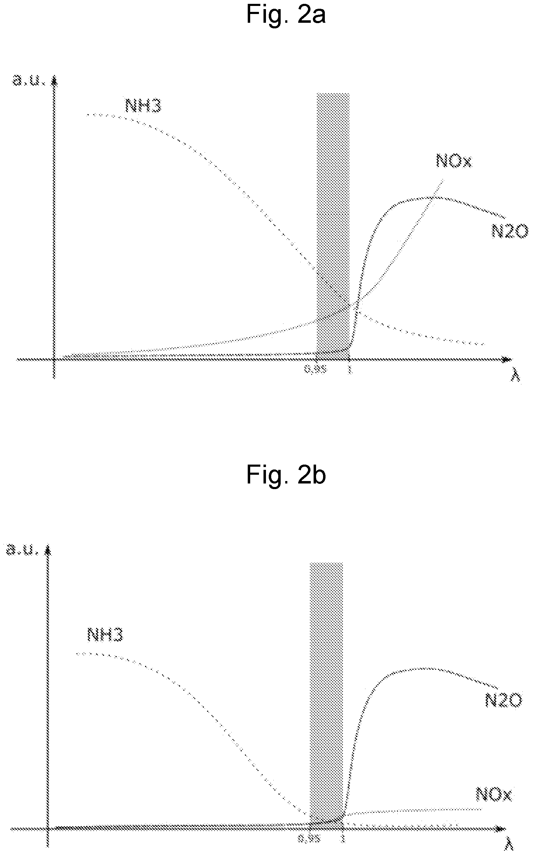

Fig 2a and 2b show diagrams, wherein the impact of the exhaust treatment of an internal combustion engine 1 according to the invention (shown by Fig 2b) is compared to an internal combustion engine 1 known in the prior art (Fig. 2a).

Therefore, in the diagrams the exhaust pollution by NH3, NOx and N2O is shown for different lambda values, wherein the lambda values preferred for the present invention (0,95 - 1) are marked up.

As can be seen, the unwanted components of the exhaust gas can be reduced significantly by an internal combustion engine according to the invention, wherein especially the NH3 and the NOx emissions can be reduced by a very large amount.

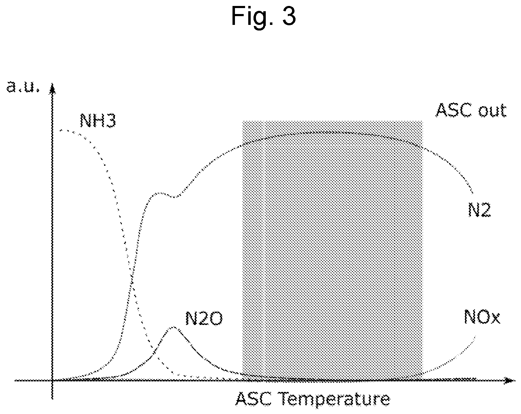

Fig. 3 shows the temperature impact of an ammonia slip catalyst converter 6 regarding the reduction of NH3, N2O an N2, wherein it can be seen that the maximal reduction rate can be reached within a temperature range (which has been marked up) having an upper and a lower limit.

Therefore, it can be seen that the control of a temperature of the ammonia slip catalyst converter 6 does decisively affect the reduction rate of the ammonia slip catalyst converter 6, wherein measurements and tests of the applicant have shown that the pest results can be achieved in a temperature range between 350° - 600° C.

### List of used reference signs:

- 1: internal combustion engine
- 2: piston-cylinder units
- 3: turbocharger
- 4: SCR converter
- 5: three-way catalyst converter
- 6: ammonia slip catalyst
- 7: oxygen tank
- 8: ammonia synthesis apparatus
- 9: engine control device
- 10: exhaust aftertreatment device
- 11: oxygen injection device
- 12: sensor
- 13: oxygen injection device
- 14: heat exchanger
- 15: actuator

## Claims

1. Internal combustion engine, comprising:
- a plurality of piston-cylinder units (2) comprising a main combustion chamber,
- an engine control device (9) for controlling the operation of the internal combustion engine (1), the engine control device (9) and the piston-cylinder units (2) being configured for combustion of an under-stoichiometric air-ammonia mixture generating an exhaust gas containing NOx, N2O and residual ammonia,
- an exhaust gas aftertreatment device (10) for aftertreatment of the exhaust gas generated during operation, wherein the exhaust gas aftertreatment device (10) comprises
• at least one SCR converter (4) or at least one three-way catalytic converter (5) to reduce at least the amount of NOx in the exhaust gas,
• at least one ammonia slip catalyst (6) downstream the at least one SCR catalytic converter (4) or the three-way catalytic converter (5) to reduce the amount of residual ammonia in the exhaust gas,
• at least one oxygen injection device (13) to inject oxygen from an oxygen source upstream or into the at least one ammonia slip catalyst (6) to provide oxygen to the at least one ammonia slip catalyst (6),
wherein the engine control device (9) is configured to:
- control at least one actuator (15) to provide an air-ammonia mixture with a lambda value in a range between 0,95 to 0,999 to the at least one main combustion chamber to create a relatively low amount of the N2O in the exhaust gas, and
- control the amount of oxygen provided to the at least one ammonia slip catalyst (6) depending on the lambda value of the under-stoichiometric air-ammonia mixture to decrease the amount of residual ammonia in the exhaust gas.

2. Internal combustion engine according to claim 1, **characterized in that** the engine control device (9) is configured to control the at least one actuator (15) to provide an air-ammonia mixture with an average lambda value in a range between 0,97 to 0,995.

3. Internal combustion engine according to one of the preceding claims, **characterized in that** an ammonia and/or a NOx sensor is arranged up- or downstream the at least one ammonia slip catalyst (6), preferably downstream the at least one SCR converter (4) or the at least one three-way catalytic converter (5).

4. Internal combustion engine according to at least one of the preceding claims, **characterized in that** the at least one actuator (15) is a fuel supply valve with adjustable fuel mass flow rates, which is configured to adjust the amount of ammonia admixed to the air provided to the at least one main combustion chamber.

5. Internal combustion engine according to at least one of the preceding claims, **characterized in that** the oxygen source is a charge air from the internal combustion engine (1), wherein an oxygen supply line for the at least one ammonia slip catalyst (6) is branched off an air supply line being fluidically connected to the piston-cylinder units (2), preferably downstream a compressor of a turbo charger (3).

6. Internal combustion engine according to at least one of the preceding claims, **characterized in that** the oxygen source is oxygen enriched air or pure oxygen from a tank (7) and/or ambient air, preferably wherein an air compressor separated from the internal combustion engine (1) is provided to compress the ambient air and/or the oxygen enriched air or the pure oxygen from the tank (7).

7. Internal combustion engine according to at least one of the preceding claims, **characterized in that** the oxygen source is an ammonia synthesis apparatus (8), which ammonia synthesis apparatus (8) is configured to separate air provided for ammonia synthesis into a nitrogen-rich stream for ammonia synthesis and an oxygen-rich stream which is at least partly provided to the at least one ammonia slip catalyst (6).

8. Internal combustion engine according to at least one of the preceding claims, **characterized in that** at least one heat exchanger (14) is provided which is configured:
- to exchange heat between exhaust gas upstream the at least one SCR catalytic converter (4) or a three-way catalytic converter (5) on the one hand and exhaust gas upstream the at least one ammonia slip catalyst (6) on the other hand and/or
- to exchange heat of the exhaust gas upstream the at least one ammonia slip catalyst (6) and a separate facility.

9. Method for operating an internal combustion engine, preferably according to at least one of the claims 1 to 8, wherein the following method steps are carried out:
- operating a plurality of piston-cylinder units (2) with combustion of an under-stoichiometric air-ammonia mixture generating an exhaust gas containing NOx, N2O and residual ammonia,
- treating the exhaust gas in at least one SCR converter (4) or at least one three-way catalytic converter (5) to reduce at least the amount of NOx in the exhaust gas,
- subsequently treating the exhaust gas treated in the at least one SCR converter (4) or the at least one three-way catalytic converter (5) in at least one ammonia slip catalyst (6) to reduce the amount of residual ammonia in the exhaust gas,
- injecting oxygen from an oxygen source upstream or into the at least one ammonia slip catalyst (6) to provide oxygen to the at least one ammonia slip catalyst (6),
- controlling at least one actuator (15) of the internal combustion engine (1) to provide an air-ammonia mixture with a lambda value in a range between 0,95 to 0,999 to the at least one main combustion chamber to create a relatively low amount of the N2O in the exhaust gas being released to the ambient, and
- controlling the amount of oxygen provided to the at least one ammonia slip catalyst (6) depending on the lambda value of the under-stoichiometric air-ammonia mixture to decrease the amount of residual ammonia in the exhaust gas.

10. Method according to claim 9, **characterized in that** the control device controls at least one actuator (15) of the internal combustion engine (1) to provide an air-ammonia mixture with a lambda value in a range between 0,97 to 0,995.

11. Method according to claim 9 or 10, **characterized in that** the lambda value is set depending on a ratio r (*c_{NOx}* / *c*_{*NH*3}) of the amount of NOx and residual ammonia in the exhaust gas, wherein said ratio r is required to be within a range between 0,9 and 1.

12. Method according to claim 11, **characterized in that** the lambda value is set based on a main condition in view of a secondary condition, wherein the main condition is that the amount of N2O in the exhaust gas being released to the ambient is minimized while the secondary condition being that the ratio r is within the range is fulfilled.

13. Method according to at least one of the claims 9 to 12, **characterized in that** the amount of ammonia and/or the amount of NOx in the exhaust gas is measured with sensors downstream the at least one combustion chamber, preferably upstream and/or downstream the at least one ammonia slip catalyst (6).

14. Method according to at least one of the claims 9 to 13, **characterized in that** for a lower set point of the lambda value of the air-ammonia mixture a higher amount of oxygen is provided to the at least one ammonia slip catalyst (6).

15. Method according to at least one of the claims 9 to 14, **characterized in that** the amount of oxygen provided to the at least one ammonia slip catalyst (6) is based on a look-up table, the look-up table mapping the lambda value and/or an engine load to an amount of oxygen provided to the at least one ammonia slip catalyst (6).

16. Method according to at least one of the claims 9 to 13, **characterized in that** the amount of oxygen provided to the at least one ammonia slip catalyst (6) is based on the residual ammonia up- or downstream the at least one ammonia slip catalyst (6).

17. Method according to claim 16, **characterized in that** the amount of oxygen provided to the at least one ammonia slip catalyst (6) is proportional to the residual ammonia in the exhaust stream and/or an engine load and/or an exhaust mass flow.

18. Method according to at least one of the claims 9 to 17, **characterized in that** heat is exchanged between exhaust gas upstream the at least one SCR converter (4) or the at least one three-way catalytic converter (5) on the one hand and exhaust gas upstream the at least one ammonia slip catalyst (6) on the other hand in order to improve the selectivity of the reduction of NOx and NH3 in the exhaust gas.

19. Method according to claim 18, **characterized in that** a closed-loop control of the lambda value, the amount of oxygen provided to the at least one ammonia slip catalyst (6), the ratio r, and/or the heat removed from or provided to the exhaust gas upstream the at least one ammonia slip catalyst (6) is carried out, the closed loop control preferably comprising at least one of the steps:
a) decreasing the lambda value set point and increasing the amount of oxygen provided to the at least one ammonia slip catalyst (6) when the ratio r is within the range between 0,97 and 1, leading to a shift of the ratio r closer to 0,9 and a minimization of the amount of N2O in the exhaust gas being released to the ambient,
b) removing heat from or providing heat to the exhaust gas upstream the ammonia slip catalyst (6) such that the ratio r stays within the range between 0,97 and 1 and a minimized amount of N2O reached in step a) is maintained.

## Patentansprüche

1. Verbrennungsmotor, umfassend:
- einer Vielzahl von Kolben-Zylinder-Einheiten (2) mit einer Hauptbrennkammer,
- einer Motorsteuerung (9) zur Steuerung des Betriebs des Verbrennungsmotors (1), wobei die Motorsteuerung (9) und die Kolben-Zylinder-Einheiten (2) für die Verbrennung eines unterstöchiometrischen Luft-Ammoniak-Gemisches ausgelegt sind, das ein Abgas erzeugt, das NOx, N2O und Restammoniak enthält,
- eine Abgasnachbehandlungsvorrichtung (10) zur Nachbehandlung des während des Betriebs erzeugten Abgases, wobei die Abgasnachbehandlungsvorrichtung (10)
• mindestens einen SCR-Katalysator (4) oder mindestens einen Dreiwegekatalysator (5) zur Reduzierung zumindest der NOx-Menge im Abgas,
• mindestens einen Ammoniakschlupf-Katalysator (6) stromabwärts des mindestens einen SCR-Katalysators (4) oder des Dreiwegekatalysators (5) zur Reduzierung der Restammoniakmenge im Abgas,
• mindestens eine Sauerstoff-Einspritzeinrichtung (13) zum Einspritzen von Sauerstoff aus einer Sauerstoffquelle stromaufwärts oder in den mindestens einen Ammoniakschlupf-Katalysator (6), um den mindestens einen Ammoniakschlupf-Katalysator (6) mit Sauerstoff zu versorgen, umfasst,
wobei die Motorsteuerung (9) so konfiguriert ist, dass sie:
- mindestens einen Aktuator (15) steuert, um ein Luft-Ammoniak-Gemisch mit einem Lambda-Wert im Bereich zwischen 0,95 und 0,999 der mindestens einen Hauptbrennkammer zuzuführen, um eine relativ geringe Menge an N2O im Abgas zu erzeugen, und
- die dem mindestens einen Ammoniakschlupf-Katalysator (6) zugeführte Sauerstoffmenge in Abhängigkeit vom Lambda-Wert des unterstöchiometrischen Luft-Ammoniak-Gemisches steuert, um die Menge an Restammoniak im Abgas zu verringern.

2. Verbrennungsmotor nach Anspruch 1, **dadurch gekennzeichnet, dass** die Motorsteuerungseinrichtung (9) so konfiguriert ist, dass sie den mindestens einen Aktuator (15) so steuert, dass ein Luft-Ammoniak-Gemisch mit einem durchschnittlichen Lambda-Wert in einem Bereich zwischen 0,97 und 0,995 bereitgestellt wird.

3. Verbrennungsmotor nach einem der vorhergehenden Ansprüche, **dadurch gekennzeichnet, dass** ein Ammoniak- und/oder ein NOx-Sensor stromaufwärts oder stromabwärts des mindestens einen Ammoniakschlupf-Katalysator (6) angeordnet ist, vorzugsweise stromabwärts des mindestens einen SCR-Konverters (4) oder des mindestens einen Dreiwegekatalysators (5).

4. Verbrennungsmotor nach wenigstens einem der vorhergehenden Ansprüche, **dadurch gekennzeichnet, dass** der mindestens eine Aktuator (15) ein Kraftstoffzufuhrventil mit einstellbaren Kraftstoffmassenströmen ist, das so konfiguriert ist, dass es die Menge an Ammoniak einstellt, die der Luft beigemischt wird, die der mindestens einen Hauptbrennkammer zugeführt wird.

5. Verbrennungsmotor nach wenigstens einem der vorhergehenden Ansprüche, **dadurch gekennzeichnet, dass** die Sauerstoffquelle ein Ladeluftstrom aus dem Verbrennungsmotor (1) ist, wobei eine Sauerstoffzufuhrleitung für den mindestens einen Ammoniakschlupf-Katalysator (6) von einer Luftzufuhrleitung, die mit den Kolben-Zylinder-Einheiten (2) fluidisch verbunden ist, vorzugsweise stromabwärts eines Kompressors eines Turboladers (3), abzweigt.

6. Verbrennungsmotor nach wenigstens einem der vorhergehenden Ansprüche, **dadurch gekennzeichnet, dass** die Sauerstoffquelle sauerstoffangereicherte Luft oder reiner Sauerstoff aus einem Tank (7) und/oder Umgebungsluft ist, wobei vorzugsweise ein vom Verbrennungsmotor (1) getrennter Luftkompressor vorgesehen ist, um die Umgebungsluft und/oder die sauerstoffangereicherte Luft oder den reinen Sauerstoff aus dem Tank (7) zu komprimieren.

7. Verbrennungsmotor nach wenigstens einem der vorhergehenden Ansprüche, **dadurch gekennzeichnet, dass** die Sauerstoffquelle eine Ammoniaksynthesevorrichtung (8) ist, wobei die Ammoniaksynthesevorrichtung (8) so konfiguriert ist, dass sie die für die Ammoniaksynthese bereitgestellte Luft in einen stickstoffreichen Strom für die Ammoniaksynthese und einen sauerstoffreichen Strom trennt, der zumindest teilweise dem mindestens einen Ammoniakschlupf-Katalysator (6) zugeführt wird.

8. Verbrennungsmotor nach wenigstens einem der vorhergehenden Ansprüche, **dadurch gekennzeichnet, dass** mindestens ein Wärmetauscher (14) vorgesehen ist, der so konfiguriert ist, dass er
- Wärme zwischen dem Abgas stromaufwärts des mindestens einen SCR-Katalysators (4) oder eines Dreiwegekatalysators (5) einerseits und dem Abgas stromaufwärts des mindestens einen Ammoniakschlupf-Katalysator (6) andererseits austauscht und/oder
- Wärme des Abgases stromaufwärts des mindestens einen Ammoniakschlupf-Katalysator (6) und einer separaten Einrichtung austauscht.

9. Verfahren zum Betreiben eines Verbrennungsmotors, vorzugsweise nach wenigstens einem der Ansprüche 1 bis 8, wobei die folgenden Verfahrensschritte durchgeführt werden:
- Betreiben einer Vielzahl von Kolben-Zylinder-Einheiten (2) mit Verbrennung eines unterstöchiometrischen Luft-Ammoniak-Gemisches, wodurch ein Abgas erzeugt wird, das Nüx, N2O und Restammoniak enthält,
- Behandeln des Abgases in mindestens einem SCR-Konverter (4) oder mindestens einem Dreiwegekatalysator (5), um mindestens die Menge an NOx im Abgas zu reduzieren,
- anschließende Behandlung des in dem mindestens einen SCR-Konverter (4) oder dem mindestens einen Dreiwegekatalysator (5) behandelten Abgases in mindestens einem Ammoniakschlupf-Katalysator (6), um die Menge an Restammoniak im Abgas zu reduzieren,
- Einspritzen von Sauerstoff aus einer Sauerstoffquelle stromaufwärts oder in den mindestens einen Ammoniakschlupf-Katalysator (6), um den mindestens einen Ammoniakschlupf-Katalysator (6) mit Sauerstoff zu versorgen,
- Steuern mindestens eines Aktuators (15) des Verbrennungsmotors (1), um der mindestens einen Hauptbrennkammer ein Luft-Ammoniak-Gemisch mit einem Lambda-Wert im Bereich zwischen 0,95 und 0,999 zuzuführen, um eine relativ geringe Menge an N2O im Abgas zu erzeugen, das an die Umgebung abgegeben wird, und
- Steuern der dem mindestens einen Ammoniakschlupf-Katalysator (6) zugeführten Sauerstoffmenge in Abhängigkeit vom Lambda-Wert des unterstöchiometrischen Luft-Ammoniak-Gemisches, um die Menge an Restammoniak im Abgas zu verringern.

10. Verfahren nach Anspruch 9, **dadurch gekennzeichnet, dass** die Steuervorrichtung mindestens einen Aktuator (15) des Verbrennungsmotors (1) so steuert, dass ein Luft-Ammoniak-Gemisch mit einem Lambda-Wert im Bereich zwischen 0,97 und 0,995 bereitgestellt wird.

11. Verfahren nach Anspruch 9 oder 10, **dadurch gekennzeichnet, dass** der Lambda-Wert in Abhängigkeit von einem Verhältnis r (C_{Nox} / c_{NH3}) der Menge an NOx und Restammoniak im Abgas eingestellt wird, wobei das Verhältnis r in einem Bereich zwischen 0,9 und 1 liegen muss.

12. Verfahren nach Anspruch 11, **dadurch gekennzeichnet, dass** der Lambda-Wert auf der Grundlage einer Hauptbedingung unter Berücksichtigung einer Nebenbedingung eingestellt wird, wobei die Hauptbedingung darin besteht, dass die Menge an N2O im Abgas, das in die Umgebung abgegeben wird, minimiert wird, während die Nebenbedingung darin besteht, dass das Verhältnis r innerhalb des Bereichs liegt.

13. Verfahren nach wenigstens einem der Ansprüche 9 bis 12, **dadurch gekennzeichnet, dass** die Menge an Ammoniak und/oder die Menge an NOx im Abgas mit Sensoren stromabwärts der mindestens einen Brennkammer, vorzugsweise stromaufwärts und/oder stromabwärts des mindestens einen Ammoniakschlupf-Katalysators (6), gemessen wird.

14. Verfahren nach wenigstens einem der Ansprüche 9 bis 13, **dadurch gekennzeichnet, dass** für einen niedrigeren Sollwert des Lambda-Wertes des Luft-Ammoniak-Gemisches eine höhere Sauerstoffmenge dem mindestens einen Ammoniakschlupf-Katalysator (6) zugeführt wird.

15. Verfahren nach wenigstens einem der Ansprüche 9 bis 14, **dadurch gekennzeichnet, dass** die dem mindestens einen Ammoniakschlupf-Katalysator (6) zugeführte Sauerstoffmenge auf einer Nachschlagetabelle basiert, wobei die Nachschlagetabelle den Lambda-Wert und/oder eine Motorlast einer dem mindestens einen Ammoniakschlupf-Katalysator (6) zugeführten Sauerstoffmenge zuordnet.

16. Verfahren nach wenigstens einem der Ansprüche 9 bis 13, **dadurch gekennzeichnet, dass** die dem mindestens einen Ammoniakschlupf-Katalysator (6) zugeführte Sauerstoffmenge auf dem Restammoniak stromaufwärts oder stromabwärts des mindestens einen Ammoniakschlupf-Katalysators (6) basiert.

17. Verfahren nach Anspruch 16, **dadurch gekennzeichnet, dass** die dem mindestens einen Ammoniakschlupf-Katalysator (6) zugeführte Sauerstoffmenge proportional zum Restammoniak im Abgasstrom und/oder zur Motorlast und/oder zum Abgasmassenstrom ist.

18. Verfahren nach wenigstens einem der Ansprüche 9 bis 17, **dadurch gekennzeichnet, dass** zwischen dem Abgas stromaufwärts des mindestens einen SCR-Konverters (4) oder des mindestens einen Dreiwegekatalysators (5) einerseits und dem Abgas stromaufwärts des mindestens einen Ammoniakschlupf-Katalysators (6) andererseits Wärme ausgetauscht wird, um die Selektivität der Reduktion von NOx und NH3 im Abgas zu verbessern.

19. Verfahren nach Anspruch 18, **dadurch gekennzeichnet, dass** eine Regelung des Lambda-Werts, der dem mindestens einen Ammoniakschlupf-Katalysator (6) zugeführten Sauerstoffmenge, des Verhältnisses r und/oder der dem Abgas stromaufwärts des mindestens einen Ammoniakschlupf-Katalysators (6) entzogenen oder zugeführten Wärme durchgeführt wird, wobei die Regelung vorzugsweise mindestens einen der folgenden Schritte umfasst:
a) Verringern des Lambda-Sollwerts und Erhöhen der dem mindestens einen Ammoniakschlupf-Katalysator (6) zugeführten Sauerstoffmenge, wenn das Verhältnis r im Bereich zwischen 0,97 und 1 liegt, was zu einer Verschiebung des Verhältnisses r näher an 0,9 und einer Minimierung der Menge an N2O im Abgas führt, das an die Umgebung abgegeben wird,
b) Entziehen von Wärme aus dem Abgas stromaufwärts des Ammoniakschlupf-Katalysators (6) oder Zuführen von Wärme zu diesem, so dass das Verhältnis r im Bereich zwischen 0,97 und 1 bleibt und eine in Schritt a) erreichte minimierte Menge an N2O aufrechterhalten wird.

## Revendications

1. Moteur à combustion interne, comportant :
- une pluralité d'unités piston-cylindre (2) comportant une chambre de combustion principale,
- un dispositif de commande de moteur (9) pour commander le fonctionnement du moteur à combustion interne (1), le dispositif de commande de moteur (9) et les unités piston-cylindre (2) étant configurés pour la combustion d'un mélange air-ammoniac sous-stœchiométrique générant un gaz d'échappement contenant du NOx, du N2O et de l'ammoniac résiduel,
- un dispositif de post-traitement des gaz d'échappement (10) pour le post-traitement des gaz d'échappement générés pendant le fonctionnement, dans lequel le dispositif de post-traitement des gaz d'échappement (10) comporte
• au moins un convertisseur SCR (4) ou au moins un pot catalytique à trois voies (5) pour réduire au moins la quantité de NOx dans les gaz d'échappement,
• au moins un catalyseur ASC (6) en aval de l'au moins un pot catalytique SCR (4) ou du pot catalytique à trois voies (5) pour réduire la quantité d'ammoniac résiduel dans les gaz d'échappement,
• au moins un dispositif d'injection d'oxygène (13) pour injecter de l'oxygène à partir d'une source d'oxygène en amont ou dans l'au moins un catalyseur ASC (6) pour fournir de l'oxygène à l'au moins un catalyseur ASC (6),
dans lequel le dispositif de commande de moteur (9) est configuré pour :
- commander au moins un actionneur (15) pour fournir un mélange air-ammoniac avec une valeur lambda dans une plage comprise entre 0,95 et 0,999 à l'au moins une chambre de combustion principale pour créer une quantité relativement faible du N2O dans les gaz d'échappement, et
- commander la quantité d'oxygène fournie à l'au moins un catalyseur ASC (6) en fonction de la valeur lambda du mélange air-ammoniac sous-stœchiométrique pour diminuer la quantité d'ammoniac résiduel dans les gaz d'échappement.

2. Moteur à combustion interne selon la revendication 1, **caractérisé en ce que** le dispositif de commande de moteur (9) est configuré pour commander l'au moins un actionneur (15) pour fournir un mélange air-ammoniac avec une valeur lambda moyenne dans une plage comprise entre 0,97 et 0,995.

3. Moteur à combustion interne selon l'une des revendications précédentes, **caractérisé en ce qu'**un capteur d'ammoniac et/ou de NOx est disposé en amont ou en aval de l'au moins un catalyseur ASC (6), de préférence en aval de l'au moins un convertisseur SCR (4) ou de l'au moins un pot catalytique à trois voies (5).

4. Moteur à combustion interne selon au moins l'une des revendications précédentes, **caractérisé en ce que** l'au moins un actionneur (15) est une vanne d'alimentation en carburant à débits massiques de carburant ajustables, qui est configurée pour ajuster la quantité d'ammoniac mélangée à l'air fourni à l'au moins une chambre de combustion principale.

5. Moteur à combustion interne selon au moins l'une des revendications précédentes, **caractérisé en ce que** la source d'oxygène est un air de suralimentation provenant du moteur à combustion interne (1), dans lequel une conduite d'alimentation en oxygène pour l'au moins un catalyseur ASC (6) est dérivée d'une conduite d'alimentation en air reliée fluidiquement aux unités piston-cylindre (2), de préférence en aval d'un compresseur d'un turbocompresseur (3).

6. Moteur à combustion interne selon au moins l'une des revendications précédentes, **caractérisé en ce que** la source d'oxygène est de l'air enrichi en oxygène ou de l'oxygène pur provenant d'un réservoir (7) et/ou de l'air ambiant, de préférence dans lequel un compresseur d'air séparé du moteur à combustion interne (1) est prévu pour comprimer l'air ambiant et/ou l'air enrichi en oxygène ou l'oxygène pur provenant du réservoir (7).

7. Moteur à combustion interne selon au moins l'une des revendications précédentes, **caractérisé en ce que** la source d'oxygène est un appareil de synthèse d'ammoniac (8), lequel appareil de synthèse d'ammoniac (8) est configuré pour séparer de l'air fourni pour la synthèse d'ammoniac en un flux riche en azote pour la synthèse d'ammoniac et un flux riche en oxygène qui est au moins partiellement fourni à l'au moins un catalyseur ASC (6).

8. Moteur à combustion interne selon au moins l'une des revendications précédentes, **caractérisé en ce qu'**au moins un échangeur de chaleur (14) est prévu qui est configuré :
- pour échanger de la chaleur entre les gaz d'échappement en amont de l'au moins un pot catalytique SCR (4) ou d'un pot catalytique à trois voies (5) d'une part et les gaz d'échappement en amont de l'au moins un catalyseur ASC (6) d'autre part et/ou
- pour échanger de la chaleur des gaz d'échappement en amont de l'au moins un catalyseur ASC (6) et d'une installation séparée.

9. Procédé pour faire fonctionner un moteur à combustion interne, de préférence selon au moins l'une des revendications 1 à 8, dans lequel les étapes de procédé suivantes sont réalisées :
- le fonctionnement d'une pluralité d'unités piston-cylindre (2) avec combustion d'un mélange air-ammoniac sous-stœchiométrique générant un gaz d'échappement contenant du NOx, du N2O et de l'ammoniac résiduel,
- le traitement des gaz d'échappement dans au moins un convertisseur SCR (4) ou au moins un pot catalytique à trois voies (5) pour réduire au moins la quantité de NOx dans les gaz d'échappement,
- le traitement ultérieur des gaz d'échappement traités dans l'au moins un convertisseur SCR (4) ou l'au moins un pot catalytique à trois voies (5) dans au moins un catalyseur ASC (6) pour réduire la quantité d'ammoniac résiduel dans les gaz d'échappement,
- l'injection d'oxygène à partir d'une source d'oxygène en amont ou dans l'au moins un catalyseur ASC (6) pour fournir de l'oxygène à l'au moins un catalyseur ASC (6),
- la commande d'au moins un actionneur (15) du moteur à combustion interne (1) pour fournir un mélange air-ammoniac avec une valeur lambda dans une plage comprise entre 0,95 et 0,999 à l'au moins une chambre de combustion principale pour créer une quantité relativement faible du N2O dans les gaz d'échappement libérés dans l'environnement, et
- la commande de la quantité d'oxygène fournie à l'au moins un catalyseur ASC (6) en fonction de la valeur lambda du mélange air-ammoniac sous-stœchiométrique pour diminuer la quantité d'ammoniac résiduel dans les gaz d'échappement.

10. Procédé selon la revendication 9, **caractérisé en ce que** le dispositif de commande commande au moins un actionneur (15) du moteur à combustion interne (1) pour fournir un mélange air-ammoniac avec une valeur lambda dans une plage comprise entre 0,97 et 0,995.

11. Procédé selon la revendication 9 ou 10, **caractérisé en ce que** la valeur lambda est réglée en fonction d'un rapport r (*c_{NOx}*/*c_{NH3}*) de la quantité de NOx et d'ammoniac résiduel dans les gaz d'échappement, dans lequel ledit rapport r doit être dans une plage comprise entre 0,9 et 1.

12. Procédé selon la revendication 11, **caractérisé en ce que** la valeur lambda est réglée sur la base d'une condition principale en tenant compte d'une condition secondaire, dans lequel la condition principale est que la quantité de N2O dans les gaz d'échappement libérés dans l'environnement est minimisée tandis que la condition secondaire selon laquelle le rapport r est dans la plage est remplie.

13. Procédé selon au moins l'une des revendications 9 à 12, **caractérisé en ce que** la quantité d'ammoniac et/ou la quantité de NOx dans les gaz d'échappement est mesurée avec des capteurs en aval de l'au moins une chambre de combustion, de préférence en amont et/ou en aval de l'au moins un catalyseur ASC (6).

14. Procédé selon au moins l'une des revendications 9 à 13, **caractérisé en ce que** pour un point de consigne inférieur de la valeur lambda du mélange air-ammoniac une quantité supérieure d'oxygène est fournie à l'au moins un catalyseur ASC (6).

15. Procédé selon au moins l'une des revendications 9 à 14, **caractérisé en ce que** la quantité d'oxygène fournie à l'au moins un catalyseur ASC (6) est basée sur une table de correspondance, la table de correspondance établissant une correspondance entre la valeur lambda et/ou une charge de moteur et une quantité d'oxygène fournie à l'au moins un catalyseur ASC (6).

16. Procédé selon au moins l'une des revendications 9 à 13, **caractérisé en ce que** la quantité d'oxygène fournie à l'au moins un catalyseur ASC (6) est basée sur l'ammoniac résiduel en amont ou en aval de l'au moins un catalyseur ASC (6).

17. Procédé selon la revendication 16, **caractérisé en ce que** la quantité d'oxygène fournie à l'au moins un catalyseur ASC (6) est proportionnelle à l'ammoniac résiduel dans le flux d'échappement et/ou une charge de moteur et/ou un débit massique d'échappement.

18. Procédé selon au moins l'une des revendications 9 à 17, **caractérisé en ce que** de la chaleur est échangée entre les gaz d'échappement en amont de l'au moins un convertisseur SCR (4) ou de l'au moins un pot catalytique à trois voies (5) d'une part et les gaz d'échappement en amont de l'au moins un catalyseur ASC (6) d'autre part afin d'améliorer la sélectivité de la réduction de NOx et de NH3 dans les gaz d'échappement.

19. Procédé selon la revendication 18, **caractérisé en ce qu'**une commande en boucle fermée de la valeur lambda, de la quantité d'oxygène fournie à l'au moins un catalyseur ASC (6), du rapport r, et/ou de la chaleur retirée des ou fournie aux gaz d'échappement en amont de l'au moins un catalyseur ASC (6) est réalisée, la commande en boucle fermée comportant de préférence au moins l'une des étapes :
a) diminution du point de consigne de valeur lambda et augmentation de la quantité d'oxygène fournie à l'au moins un catalyseur ASC (6) lorsque le rapport r est dans la plage comprise entre 0,97 et 1, entraînant un rapprochement du rapport r de 0,9 et une minimisation de la quantité de N2O dans les gaz d'échappement libérés dans l'environnement,
b) élimination de chaleur des, ou fourniture de chaleur aux, gaz d'échappement en amont du catalyseur ASC (6) de sorte que le rapport r reste dans la plage comprise entre 0,97 et 1 et qu'une quantité minimisée de N2O atteinte à l'étape a) soit maintenue.
